(19)

**Europäisches Patentamt**
**European Patent Office**
**Office européen des brevets**

(11)  **EP 2 555 299 A1**

(12) **EUROPEAN PATENT APPLICATION**
published in accordance with Art. 153(4) EPC

| | |
|---|---|
| (43) Date of publication:<br>**06.02.2013 Bulletin 2013/06** | (51) Int Cl.:<br>***H01M 8/04*** *(2006.01)*   ***H01M 8/10*** *(2006.01)* |
| (21) Application number: **11762284.5** | (86) International application number:<br>**PCT/JP2011/001947** |
| (22) Date of filing: **31.03.2011** | (87) International publication number:<br>**WO 2011/122042 (06.10.2011 Gazette 2011/40)** |

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (72) Inventor: **MATSUOKA, Koji**<br>**Ora-gun**<br>**Gunma 370-0596 (JP)** |
| (30) Priority: **31.03.2010   JP 2010080558** | (74) Representative: **Algemeen Octrooi- en**<br>**Merkenbureau**<br>**P.O. Box 645**<br>**5600 AP Eindhoven (NL)** |
| (71) Applicant: **Eneos Celltech Co., Ltd.**<br>**Gunma 370-0596 (JP)** | |

(54)  **FUEL CELL SYSTEM**

(57)   A fuel cell (100) includes an electrolyte membrane (120), an anode (122) which is disposed on one surface of the electrolyte membrane (120) and includes an anode catalyst layer, a cathode (124) which is disposed on the other surface of the electrolyte membrane (120) and includes a cathode catalyst layer, and an adjustment unit which allows at least one of a relative humidity of a gas which is in contact with the anode catalyst layer and a relative humidity of a gas which is in contact with the cathode catalyst layer to be decreased down to less than 100% before a fuel is supplied at the time of starting.

FIG.1

EP 2 555 299 A1

**Description**

TECHNICAL FIELD

The present invention relates to a fuel cell system including a fuel cell which generates electricity through an electrochemical reaction of hydrogen and oxygen.

BACKGROUND TECHNOLOGY

Recently, fuel cells having high energy conversion efficiency and generating no toxic substances through an electricity generation reaction have attracted attention. As one of the fuel cells, there has been known a solid polymer type fuel cell which is allowed to operate at a low temperature of 100°C or less.

The solid polymer type fuel cell is a device having a basic structure where a solid polymer electrolyte membrane as an electrolyte membrane is disposed between a fuel electrode and an air electrode and allowing a fuel gas including hydrogen to be supplied to the fuel electrode and allowing an oxidant gas including oxygen to be supplied to the air electrode to generate electricity through the following electrochemical reaction.

$$\text{Fuel Electrode: } H_2 \rightarrow 2H^+ + 2e^- \qquad (1)$$

$$\text{Air Electrode: } 1/2O_2 + 2H^+ + 2e^- \rightarrow H_2O \qquad (2)$$

Each of the anode and the cathode is configured with a structure where a catalyst layer and a gas diffusion layer are stacked. The fuel cell is configured so that the catalyst layers of the electrodes are disposed to face each other with the solid polymer electrolyte membrane interposed therebetween. The catalyst layer is a layer where carbon particles carrying catalyst are bound by an ion exchange resin. The gas diffusion layer becomes a passage of the oxidant gas or the fuel gas.

In the anode, the hydrogen included in the supplied fuel is decomposed into hydrogen ions and electrons as expressed by the above Formula (1). Among them, the hydrogen ions move through an inner portion of the solid polymer electrolyte membrane toward the air electrode, and electrons move through an external circuit towards the air electrode. On the other hand, in the cathode, the oxygen included in the oxidant gas supplied to the cathode react with the hydrogen ions and electrons moved from the fuel electrode to generate water as expressed by the above Formula (2). In this manner, since electrons move from the fuel electrode toward the air electrode in the external circuit, power is extracted (refer to Patent Document 1).

[Related Art Documents]

[Patent Documents]

[Patent Document 1] Japanese Patent Application Laid-Open No. 2006-140087

DISCLOSURE OF THE INVENTION

PROBLEMS TO BE SOLVED BY THE INVENTION

If the fuel cell is stopped and the supplying of the fuel gas to the anode is stopped, air is mixed into the anode side. If the fuel cell is started again in this state, at the upstream side where the concentration of the fuel gas is high, protons are conducted from the anode to the cathode through an electrolyte membrane (solid polymer electrolyte membrane). On the other hand, at the downstream side where the concentration of the fuel gas is low due to the mixed air, the reactions expressed by the following Formulas proceed in the cathode, and protons are conducted from the cathode to the anode, so that there is a problem in that a reverse current flows.

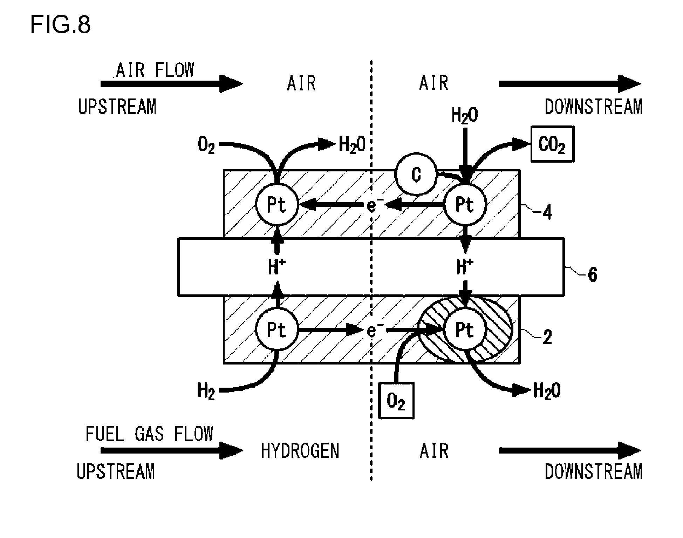

More specifically, as illustrated in FIG. 8, at the upstream side of the reaction gas, in an anode 2 and a cathode 4 with an electrolyte membrane 6 interposed therebetween, similarly to general battery cell reactions, the reactions expressed by the following Formulas (3) and (4) proceed. On the other hand, at the exhaustion side (downstream side), in the anode 2 and the cathode 4, the reactions expressed by the following Formulas (5) and (6) proceed, so that a reverse current occurs. Due to the reaction (6) occurring in the cathode 4 of the exhaustion side, oxidation or corrosion of an ion exchange resin or carbon particles for carrying catalysts used for the cathode 4 proceeds, so that life cycle is shortened due to deterioration of an electron conduction path, deterioration in gas diffusibility, and the like.

Upstream Side

$$\text{Anode: } H_2 \rightarrow 2H^+ + 2e^- \qquad (3)$$

$$\text{Cathode: } O_2 + 4H^+ + 4e^- \rightarrow 2H_2O \qquad (4)$$

Downstream Side

$$\text{Anode: } O_2 + 4H^+ + 4e^- \rightarrow 2H_2O \qquad (5)$$

$$\text{Cathode: } C + 2H_2O \rightarrow CO_2 + 4H^+ + 4e^- \qquad (6)$$

The present invention is made in view of such circumstances, and an object is to provide a technique for suppressing deterioration of a material constituting a catalyst layer caused by the occurrence of a reverse current in at least one of the anode catalyst layer and the cathode catalyst layer at the time of starting a fuel cell system.

MEANS FOR SOLVING THE PROBLEMS

An aspect of the present invention relates to a fuel cell system including: a fuel cell configured to include an electrolyte membrane, an anode which is disposed on one surface of the electrolyte membrane and includes an anode catalyst layer, and a cathode which is disposed on the other surface of the electrolyte membrane and includes a cathode catalyst layer; and an adjustment unit which adjusts a relative humidity (sometimes, referred to as a degree of humidification). The adjustment unit allows at least one of a relative humidity (RH) of a gas which is in contact with the anode catalyst layer and a relative humidity of a gas which is in contact with the cathode catalyst layer to be decreased down to less than 100% during at least any one of a time of stopping the fuel cell, a time after introducing of a raw fuel before starting of electricity generation, or a time after starting of electricity generation until output power becomes rating power.

According to the above aspect of the present invention, at the time of starting the fuel cell system, with respect to at least one of the anode catalyst layer and the cathode catalyst layer, deterioration of a material constituting the catalyst layer caused by the occurrence of a reverse current can be remarkably suppressed. In addition, although the starting of the fuel cell system is repeated in a higher temperature condition than the related art, the durability of the anode catalyst layer and the cathode catalyst layer can be improved.

In addition, in the present invention, the "time of starting" denotes a time after introducing of a raw fuel before starting of electricity generation, that is, a time period from the time when the raw fuel is introduced into the fuel cell system to the time when a humidified gas is supplied to the fuel cell (cell stack) (a humidified fuel gas is supplied to the anode and a humidified oxidant gas is supplied to the cathode) just before the electricity generation is started (load connection is started).

In the above aspect of the present invention, the adjustment unit may further have a function of adjusting a temperature. In addition, in general, it is considered that, in the case where the starting and stopping of the fuel cell system are repeated, as the decreasing rate of the electro chemical surface area (ECSA) is low, the residual rate of the material constituting the catalyst layer remaining in the anode catalyst layer and the cathode catalyst layer is high, so that the life cycle of the anode catalyst layer and the cathode catalyst layer can be prolonged. Therefore, the adjustment unit may adjust the relative humidity (x) and, if necessary, the temperature during at least one of a period of time of stopping the fuel cell, a period of time after introducing of a raw fuel before starting of electricity generation, or a period of time after starting of electricity generation until output power becomes rating power, with respect to at least one of the relative humidity of the gas which is in contact with the anode catalyst layer and the relative humidity of the gas which is in contact with the cathode catalyst layer and, if necessary, at least one of the temperature of the gas which is in contact with the anode catalyst layer and the temperature of the gas which is in contact with the cathode catalyst layer, so that a relation between the relative humidity (x) and the decreasing rate (y) of the electro chemical surface area of the gas which is in contact with the anode catalyst layer or the cathode catalyst layer of which the relative humidity is adjusted satisfies the following Formulas I to III:

$$0.2302e^{0.0499x} \leq y \leq 0.3013e^{0.056x} \text{ (Formula I)}$$

$$x < 100 \text{ (Formula II)}$$

$$0 < y < 35 \text{ (Formula III)}$$

According to the above aspect of the present invention, at the time of starting the fuel cell system, with respect to at least one of the anode catalyst layer and the cathode catalyst layer, deterioration of a material constituting the catalyst layer caused by the occurrence of a reverse current can be more efficiently suppressed. In addition, although the starting of the fuel cell system is repeated at much higher temperature than the related art, the durability of the anode catalyst layer and the cathode catalyst layer is further improved, so that the life cycle is further prolonged.

According to the above aspect of the present invention, the adjustment unit may supply a gas, of which the relative humidity is less than 100%, to at least one of the anode and cathode of which the relative humidity are adjusted, so that at least one of the relative humidity of the gas which is in contact with the anode catalyst layer and the relative humidity of the gas which is in contact with the cathode catalyst layer is decreased to less than 100%.

According to the above aspect of the present invention, at the time of starting the fuel cell system, with respect to at least one of the anode catalyst layer and the cathode catalyst layer, deterioration of a material constituting the catalyst layer caused by the occurrence of a reverse current can be simply and efficiently suppressed.

According to the above aspect of the present invention, the fuel cell system may further include a voltage measurement unit which continuously measures an output voltage of the fuel cell. Furthermore, the adjustment unit may adjust the relative humidity (x) and the temperature when a difference between a reference value and an output voltage measured by the voltage measurement unit is equal to or larger than a predetermined value.

According to the above aspect of the present invention, the mixing of the air into the anode catalyst layer can be estimated simply and easily at low coat.

According to the above aspect of the present invention, the adjustment unit may be connected through a bypass path to the fuel cell.

According to the above aspect of the present invention, at the time of starting the fuel cell system, with respect to at least one of the anode catalyst layer and the cathode catalyst layer, deterioration of a material constituting the catalyst layer caused by the occurrence of a reverse current can be more simply and efficiently suppressed.

According to the above aspect of the present invention, the fuel cell system may further includes: a raw fuel supplying unit; and a desulfurization unit which removes a sulfur component of a raw fuel supplied from the raw fuel supplying unit. Furthermore, the bypass path may be a path which supplies the raw fuel, which is supplied from the raw fuel supplying unit and desulfurized down to 20 ppb or less by the desulfurization unit, to at least one of the anode catalyst layer and the cathode catalyst layer.

According to the above aspect of the present invention, at the time of starting the fuel cell system, with respect to at least one of the anode catalyst layer and the cathode catalyst layer, deterioration of a material constituting the catalyst layer caused by the occurrence of a reverse current can be more simply and efficiently suppressed.

According to the above aspect of the present invention, the adjustment unit may supply non-humidified air through the bypass path to the cathode catalyst layer.

According to the above aspect of the present invention, at the time of starting the fuel cell system, with respect to the cathode catalyst layer, deterioration of a material constituting the catalyst layer caused by the occurrence of a reverse current can be more simply and efficiently suppressed.

In addition, appropriate combinations of the aforementioned components can be included in the scope of the invention of which the patent is requested to be protected through the present patent application.

EFFECT OF THE INVENTION

According to the present invention, at the time of starting the fuel cell system, with respect to at least one of the anode catalyst layer and the cathode catalyst layer, deterioration of a material constituting the catalyst layer caused by the occurrence of a reverse current is suppressed.

BRIEF DESCRIPTION OF THE DRAWINGS

FIG. 1 is a schematic diagram illustrating an overall configuration of a fuel cell system according to a first embodiment.
FIG. 2 is a schematic perspective diagram illustrating a structure of a fuel cell according to the first embodiment.
FIG. 3 is a flowchart illustrating control for adjusting a relative humidity according to the first embodiment.
FIG. 4 is a schematic diagram illustrating an overall configuration of a fuel cell system according to a second embodiment.

FIG. 5 is a schematic diagram illustrating an overall configuration of a fuel cell system according to a third embodiment.

FIG. 6 is a graph illustrating a residual rate of an electro chemical surface area (ECSA) in the case where starting and stopping are performed predetermined times with respect to fuel cell systems according to Examples 1 and 2 and Comparative Example 1.

FIG. 7 is a graph illustrating relations between a relative humidity (RH) and a decreasing rate of an electro chemical surface area (ECSA) at predetermined temperatures.

FIG. 8 is a diagram illustrating a mechanism of occurrence of a reverse current at the time of starting a fuel cell.

FIG. 9 is a graph illustrating a relation between a decreasing rate (y) of an electro chemical surface area and a decrease in voltage (mV) after 2000 times of starting and stopping.

FIG. 10 is a graph illustrating a relation between a replacement degree of a humidity-adjusted gas (a non-humidified air being supplied to both of the anode catalyst layer and the cathode catalyst layer) and a decrease in voltage (mV) in the case where an in-stack capacity after 2000 times of starting and stopping is set to 1.

FIG. 11 is a graph illustrating a relation between a replacement degree of a humidity-adjusted gas (a reformed gas having a relative humidity of 50% which is obtained by reforming LP gas with hydrogen being supplied to the anode catalyst layer and air having a relative humidity of 50% being supplied to the cathode catalyst layer) and a decrease in voltage (mV) in the case where the in-stack capacity after 2000 times of starting and stopping is set to 1.

FIG. 12 is a graph illustrating a relation between a replacement degree of a humidity-adjusted gas (a non-humidified, desulfurized, LPG gas being supplied to both of the anode catalyst layer and the cathode catalyst layer) and a decrease in voltage (mV) in the case where the in-stack capacity after 2000 times of starting and stopping is set to 1.

BEST MODE FOR CARRYING OUT THE INVENTION

Hereinafter, embodiments of the present invention will be described with reference to the drawings. In addition, in the entire drawings, the same components are denoted by the same reference numerals, and the description thereof is not provided.

(First Embodiment)

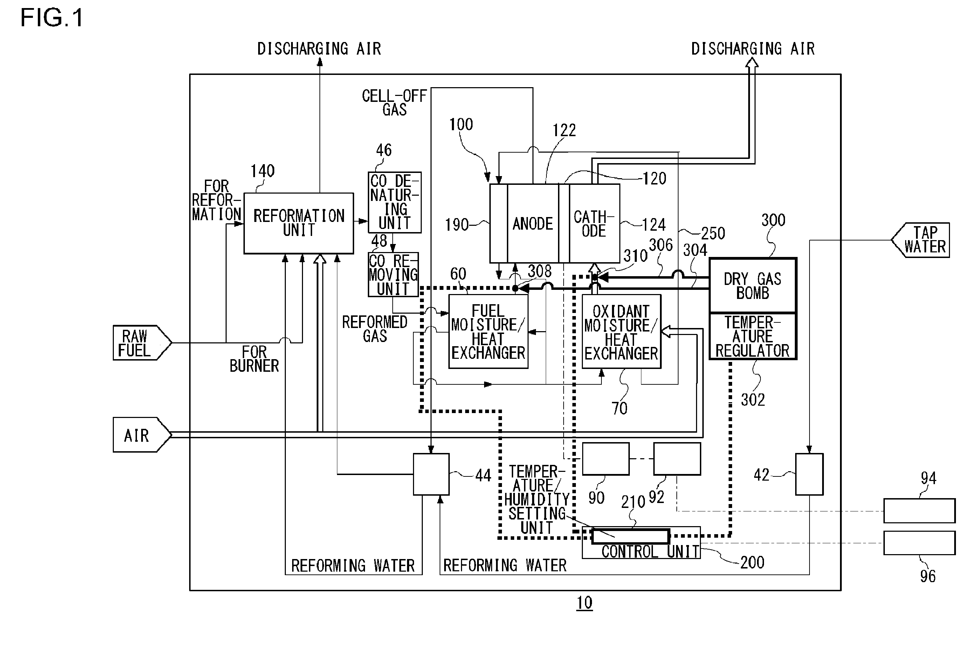

FIG. 1 is a schematic diagram illustrating an overall configuration of a fuel cell system 10 according to a first embodiment. In addition, the schematic diagram of FIG. 1 is a figure mainly illustrating functions of each component or connections of components schematically, but does not limit positional relation and arrangement of each component.

The fuel cell system 10 includes, as a main constitution, a reformation unit 140, a CO denaturing unit 46, a CO removing unit 48, a fuel cell 100 (fuel cell stack), a fuel moisture/heat exchanger 60, an oxidant moisture/heat exchanger 70, a converter 90, and inverter 92, and a control unit 200.

The reformation unit 140 generates a reformed gas, where hydrogen is rich due to water vapor reformation, by using a supplied raw fuel. In addition, in the reformation unit 140, tap water, on which water treatment is performed by a water treatment apparatus 42 for performing water treatment of water supplied from the tap water by using a reverse osmosis membrane and an ion exchange resin, is supplied as water for reformation. The reformation unit 140 performs water vapor reformation by using the water for reformation.

A cell-off gas, which is a reformed gas in an unreacted state and exhausted from the fuel cell 100 (fuel cell stack) is transported through a gas/liquid separation unit 44 to the reformation unit 140. In the gas/liquid separation unit 44, only the gas component of the cell-off gas is extracted and transported to the reformation unit 140 to be used as a fuel for a burner. In addition, the gas/liquid separation unit 44 also has a heat exchange function of allowing the cell-off gas and the water for reformation to exchange heat, so that the water for reformation is heated by heat of the cell-off gas.

The reformed gas generated by the reformation unit 140 is supplied to the CO denaturing unit 46. In the CO denaturing unit 46, carbon monoxide is denatured into hydrogen through a shift reaction. Therefore, it is possible to increase a concentration of hydrogen and to decrease a concentration of CO by about 1%.

The reformed gas of which the concentration of CO is decreased by the CO denaturing unit 46 is supplied to the CO removing unit 48. In the CO removing unit 48, the concentration of CO is decreased down to 10 ppm or less through a CO oxidation reaction using a CO selective oxidation catalyst. In addition, air necessary for the CO oxidation reaction is supplied to the reformed gas of which the concentration of CO is decreased by the CO denaturing unit 46.

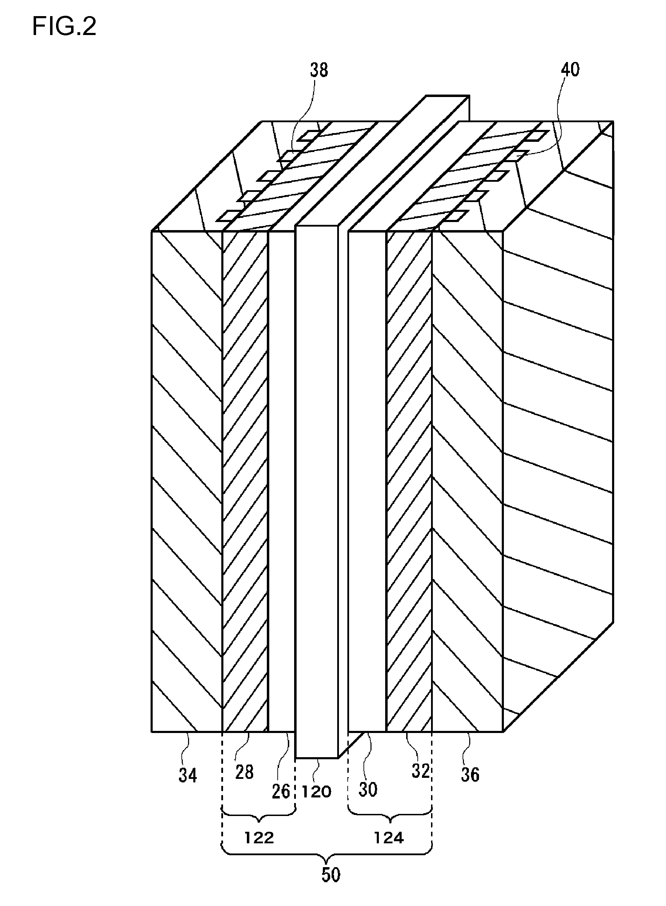

The reformed gas of which the concentration of CO is further decreased by the CO removing unit 48 is transported to the fuel moisture/heat exchanger 60. The fuel moisture/heat exchanger 60 adjusts a relative humidity and temperature of the reformed gas by bubbling the reformed gas using water stored in a tank according to a command of the control unit 200. The reformed gas which is humidified and heated by the fuel moisture/heat exchanger 60 is supplied to an anode 122 of the fuel cell 100. The anode 122 includes an anode catalyst layer 26 illustrated in FIG. 2.

On the other hand, the air acquired from outside is first transported to the oxidant moisture/heat exchanger 70. The oxidant moisture/heat exchanger 70 adjusts a relative humidity and temperature of the air by bubbling the air using water stored in a tank according to a command of the control unit 200. The air gas which is humidified and heated by the oxidant moisture/heat exchanger 70 is supplied to a cathode 124 of the fuel cell 100. The cathode 124 includes a cathode catalyst layer 30 illustrated in FIG. 2.

A cooling water circulation system 250 which circulates cooling water for cooling the fuel cell 100 is installed in the fuel cell system 10. The cooling water passes through a cooling water plate 190 installed in each cell of the fuel cell 100, so that the fuel cell 100 is cooled. A portion of the cooling water exhausted from the fuel cell 100 is stored in a tank of the fuel moisture/heat exchanger 60 and, after that, is stored in a tank of the oxidant moisture/heat exchanger 70. The remaining portion of the cooling water exhausted from the fuel cell 100 is directly transported to the oxidant moisture/heat exchanger 70 and is stored in the tank of the oxidant moisture/heat exchanger 70.

The fuel cell 100 performs electricity generation by using the hydrogen contained in the reformed gas and the oxygen contained in the air. More specifically, in each cell (single cell) constituting the fuel cell 100, the electrode reaction expressed by Formula (1) occurs in the anode 122 which is in contact with one surface of a solid polymer electrolyte membrane 120. On the other hand, the electrode reaction expressed by Formula (2) occurs in the cathode 124 which is in contact with the other surface of the solid polymer electrolyte membrane 120. Each cell is cooled by the cooling water passing through the cooling water plate 190, so that the temperature thereof is appropriately adjusted in a range of about 70°C to 80°C.

$$\text{Anode: } H_2 \rightarrow 2H^+ + 2e^- \qquad (1)$$

$$\text{Cathode: } 1/2O_2 + 2H^+ + 2e^- \rightarrow H_2O \qquad (2)$$

FIG. 2 is a schematic perspective diagram illustrating a structure of the fuel cell 100 according to the first embodiment. The fuel cell 100 includes a plate-shaped membrane electrode assembly 50, and a separator 34 and a separator 36 are installed at two sides of the membrane electrode assembly 50. In this example, although only one membrane electrode assembly 50 is illustrated, a fuel cell stack may be configured by stacking a plurality of membrane electrode assemblies 50 through the separators 34 or the separators 36. The membrane electrode assembly 50 includes a solid polymer electrolyte membrane 120, an anode 122, and a cathode 124.

The anode 122 includes a stack structure configured with an anode catalyst layer 26 and a gas diffusion layer 28. On the other hand, the cathode 124 includes a stack structure configured with a cathode catalyst layer 30 and a gas diffusion layer 32. The anode catalyst layer 26 of the anode 122 and the cathode catalyst layer 30 of the cathode 124 are installed to face each other with the solid polymer electrolyte membrane 120 interposed therebetween.

A gas passage 38 is installed in the separator 34 installed at the anode 122 side. A fuel gas from a fuel-supplying manifold (not illustrated) is distributed to the gas passage 38, and the fuel gas is supplied through the gas passage 38 to the membrane electrode assembly 50. More specifically, during operation of the fuel cell system 10, the fuel gas, for example, the reformed gas containing hydrogen gas passes through the gas passage 38 along the surface of the gas diffusion layer 28 from the upper side to the lower side, so that the fuel gas is supplied to the anode 122.

A gas passage 40 is installed in the separator 36 installed at the cathode 124 side. An oxidant gas from an oxidant-supplying manifold (not illustrated) is distributed to the gas passage 40, and an oxidant gas is supplied through the gas passage 40 to the membrane electrode assembly 50. On the other hand, during operation of the fuel cell 100, the oxidant gas, for example, the air passes through the gas passage 40 along the surface of the gas diffusion layer 32 from the upper side to the lower side, so that the oxidant gas is supplied to the cathode 124.

Therefore, an electrochemical reaction occurs in the membrane electrode assembly 50. If the hydrogen gas is supplied through the gas diffusion layer 28 to the anode catalyst layer 26, protons are generated from hydrogen in the gas, and the protons move through the solid polymer electrolyte membrane 120 to the cathode 124 side. At this time, emitted electrons move to an external circuit and flow from the external circuit into the cathode 124. On the other hand, if the air is supplied through the gas diffusion layer 32 to the cathode catalyst layer 30, oxygen and protons are coupled with each other to form water. As a result, in the external circuit, the electrons flow from the anode 122 to the cathode 124, so that power can be extracted.

The solid polymer electrolyte membrane 120 has good ion conductivity in a wet state and serves as an ion exchange membrane of allowing protons to move between the anode 122 and the cathode 124. The solid polymer electrolyte membrane 120 is made of a solid polymer material such as a fluoro-containing polymer or a non-fluoropolymer. For example, a sulfonic acid type perfluoro carbon polymer, a polysulphone resin, a perfluoro carbon polymer having a phosphonic acid group or a carboxylic acid group, or the like may be used. As an example of the sulfonic acid type perfluoro carbon polymer, there is Nafion (manufactured by DuPont: registered trade mark) 112, or the like. In addition, as an example of the non-fluoropolymer, there is a sulfonated, aromatic polyether ether ketone, polysulphone, or the like. A typical thickness of the solid polymer electrolyte membrane 120 is in a range of 5 $\mu$m to 50 $\mu$m.

The anode catalyst layer 26 constituting the anode 122 is configured with an ion conductor (ion exchange resin) and carbon particles carrying metal catalysts, that is, catalyst carrying carbon particles. A typical thickness of the anode catalyst layer 26 is 10 μm. The ion conductor has a function of allowing the carbon particles carrying alloy catalysts and the solid polymer electrolyte membrane 120 to be in contact with each other and allowing protons to be transferred therebetween. The ion conductor may be made of the same polymer material as that of the solid polymer electrolyte membrane 120.

As an example of the metal catalyst used for the anode catalyst layer 26, there is an alloy catalyst made of, for example, noble metal and ruthenium. As an example of the noble metal used for the alloy catalyst, there is, for example, platinum, palladium, or the like. In addition, as an example of the carbon particles carrying the metal catalyst, there is acetylene black, Ketjen black, carbon nano tube, carbon nano onion, or the like.

The gas diffusion layer 28 constituting the anode 122 may include an anode gas diffusion substrate and a microporous layer which is coated on the anode gas diffusion substrate. The anode gas diffusion substrate is preferably configured with a pore structure having electron conductivity, and for example, carbon paper, carbon woven fabric, carbon nonwoven fabric, or the like may be used.

The microporous layer is a paste-state kneading material which is obtained by kneading a conductive powder and a water repellent. As an example of the conductive powder, for example, carbon black may be used. In addition, as an example of the water repellent, a tetrafluoro ethylene resin (PTFE), a fluorine-based resin such as tetrafluoro ethylene hexafluoro propylene copolymer (FEP), or the like may be used. In addition, the water repellent preferably has a binding property. Herein, the binding property denotes a property where a material having a low viscosity is bound to a material breakable in viscosity so that the material is changed into a highly viscous state. Since the water repellent has the binding property, the paste can be obtained by kneading the conductive powder and the water repellent.

The cathode catalyst layer 30 constituting the cathode 124 is configured with an ion conductor (ion exchange resin) and carbon particles carrying catalysts, that is, catalyst carrying carbon particles. The ion conductor has a function of allowing the carbon particles carrying catalysts and the solid polymer electrolyte membrane 120 to be in contact with each other and allowing protons to be transferred therebetween. The ion conductor may be made of the same polymer material as that of the solid polymer electrolyte membrane 120. As an example of the carried catalyst, for example, platinum or a platinum alloy may be used. As an example of a metal used for the platinum alloy, there is cobalt, nickel, iron, manganese, iridium, or the like. In addition, as an example of the carbon particle carrying the catalyst, there is acetylene black, Ketjen black, carbon nano tube, carbon nano onion, or the like.

The gas diffusion layer 32 is made of a cathode gas diffusion substrate. The cathode gas diffusion substrate is preferably configured with a pore structure having electron conductivity, and for example, a metal plate, a metal film, conductive polymer, carbon paper, carbon woven fabric, carbon nonwoven fabric, or the like may be used.

Returning to FIG. 1, the DC power generated in the fuel cell 100 is converted into DC power having a predetermined voltage (for example, 24 V) by the converter 90 and is converted into AC power (for example, 100 V) by the inverter 92. The AC power converted by the inverter 92 is output to a system 94. In addition, The DC power having a predetermined voltage converted by the converter 90 is used as a power supply of the control unit 200 and the like.

The control unit 200 adjusts a supplying amount of the fuel supplied from the reformation unit 140 and a supplying amount of the air received from an outer portion to control an electricity generation amount of the fuel cell 100. Besides, the control unit 200 adjusts a degree of opening of a control valve installed in a pipe for the cooling water and a circulation pump to control a flowrate of the cooling water. In addition, the control unit 200 transmits and receives electrical signals among the converter 90, the inverter 92, and the like to control various apparatuses. The control unit 200 may perform infrared (IR) communication with a remote controller 96. Accordingly, a user may set operations of the fuel cell system 10 by using the remote controller 96.

In addition, a temperature/humidity setting unit 210 for controlling the relative humidity and temperatures of the anode catalyst layer 26 and the cathode catalyst layer 30 is installed in the control unit 200. The temperature/humidity setting unit 210 adjusts the relative humidity and temperatures of the anode catalyst layer 26 and the cathode catalyst layer 30 by using an adjustment unit including a dry gas bomb 300, a temperature regulator 302, an anode side bypass 304, a cathode side bypass 306, an anode pipe valve 308, and a cathode pipe valve 310.

More specifically, the temperature/humidity setting unit 210 controls the anode pipe valve 308, so that opened/ closed states of a path from the fuel moisture/heat exchanger 60 to the anode 122 and an anode side bypass 304 from the dry gas bomb 300 to the anode 122 are exclusively controlled. In addition, the temperature/humidity setting unit 210 controls the cathode pipe valve 310, so that opened/closed states of a path from the oxidant moisture/heat exchanger 70 to the cathode 124 and a cathode side bypass 306 from the dry gas bomb 300 to the cathode 124 are exclusively controlled. Due to the control, the temperature/humidity setting unit 210 supplies a humidity-adjusted gas, which is a dry gas of which the humidity is adjusted, through the anode side bypass 304 and the cathode side bypass 306 to the anode catalyst layer 26 constituting the anode 122 and the cathode catalyst layer 30 constituting the cathode 324.

In addition, if necessary, the temperature/humidity setting unit 210 controls the temperature regulator 302 to adjust the temperature of the dry gas by cooling or heating the dry gas supplied from the dry gas bomb 300. In addition, the temperature/humidity setting unit 210 controls the anode pipe valve 308 and the cathode pipe valve 310 to adjust a supplying amount (L) or supplying time of the humidity-adjusted gas supplied to the anode catalyst layer 26 and the cathode catalyst layer 30.

The supplying amount (L) of the humidity-adjusted gas to the fuel cell 100 is preferably set to be in a range of $1 \leq L < 50$, wherein a capacity (in-stack capacity) of the humidity-adjusted gas from the position where the gas is introduced into the gas passage 38 and the gas passage 40 of the fuel cell 100 or the fuel-supplying manifold (not illustrated) to the position where the gas is exhausted is set to be 1. In the case where the supplying amount (L) is less than 1, the gas in the fuel cell 100 is not sufficiently replaced, and thus, deterioration of the materials constituting the anode catalyst layer 26 and the cathode catalyst layer 30 may not be suppressed. On the other hand, in the case where the supplying amount (L) is equal to or more than 50, the moisture in the membrane electrode assembly 50 is decreased, and thus, the membrane electrode assembly 50 is dried, so that durability may be deteriorated. The supplying amount (L) of the humidity-adjusted gas is preferably in a range of $2 \leq L \leq 20$. Accordingly, a decrease in voltage of the fuel cell 100 is greatly suppressed. In addition, the supplying amount (L) of the humidity-adjusted gas is more preferably in a range of $3 \leq L \leq 10$. Accordingly, the decrease in voltage of the fuel cell 100 is further suppressed.

In addition, in some cases, the relation between the range of the supplying amount (L) and the capacity may be slightly different according to a structure of the fuel cell 100, a type or flowrate of the humidity-adjusted gas, or the like. In these cases, when humidity-adjusted hydrogen and humidity-adjusted air are supplied to the anode catalyst layer 26 and the cathode catalyst layer 30, respectively, without being connected to a load, a change in potential is measured, and an amount of a gas necessary until the fuel cell 100 is recovered (voltage being, for example, equal to or higher than 0.9 V) may be denoted by L.

A timing of supplying the humidity-adjusted gas under the control of the temperature/humidity setting unit 210 may be a time of stopping of the fuel cell, a time of starting the fuel cell (from the time of introducing a raw fuel to the time of starting electricity generation), or a time until output power becomes rating power from the time of starting electricity generation. For example, the following timings (1) to (4) are considered.

(1) The humidity-adjusted gas is supplied at the time of stopping the fuel cell 100 or just before starting the fuel cell 100 (during non-generation) to sufficiently dry the inner portion of the fuel cell 100, and after that, the gas is further supplied.
(2) At the time of starting the fuel cell 100 (during non-generation), the humidity-adjusted gas is supplied for a certain time interval to dry the inner portion of the fuel cell 100.
(3) After starting the fuel cell 100, during the time until the output power becomes rating power from the time of starting electricity generation of the fuel cell 100, the humidity-adjusted gas is supplied to dry the inner portion of the fuel cell 100. In this case, the fuel gas (hydrogen, a reformed gas, or the like) is supplied as the humidity-adjusted gas to the anode catalyst layer 26 and the oxidant gas such as air or oxygen is supplied as the humidity-adjusted gas to the cathode catalyst layer 30. In addition, instead of supplying the humidity-adjusted gas until the output power becomes the rating power, the humidity-adjusted gas may be supplied for a certain time interval after the fuel cell 100 starts electricity generation.
(4) The inner portion of the fuel cell 100 is dried according to a combination of (1) to (3).

In addition, in the case where the air is mixed into the anode catalyst layer 26, the relative humidity (x) and the temperature may be adjusted by the temperature/humidity setting unit 210. In this case, the cell voltage which is an output voltage of each cell or a plurality of cells of the fuel cell 100 is continuously measured by using a voltage measurement unit (not illustrated), so that the mixing of the air into the anode catalyst layer 26 is detected. Under the same ambience, the cathode potential can be considered to be constant. On the other hand, in the case where the air is mixed into the anode catalyst layer 26 under the hydrogen-rich ambience, the anode potential is increased. Therefore, the cell voltage (mV) expressed by the following Formula IV is decreased. When a difference between a reference value and the cell voltage measured by the voltage measurement unit is equal to or higher than a predetermined value, it may be determined that the air is mixed. As an example of the reference value, a theoretical value of the cell voltage may be used in the case where it is assumed that no air exists in the anode catalyst layer 26, or a voltage value may be used in the state where hydrogen exists immediately after the stopping of the fuel cell 100.

$$\text{(Cell Voltage)} = \text{(Cathode Potential)} - \text{(Anode Potential)} \quad \text{(Formula IV)}$$

The predetermined value as an indicator for determining whether or not the air is mixed may be in a range of 1 to 1,000 mV per cell. In the case where the value is less than 1 mV, there is a high possibility of erroneous detection caused by noise (for example, a change in potential of the cathode or a variation in voltage due to a change in pressure of the anode). In addition, in the case where the value is more than 1,000 mV, the mixing of a very small amount of air may not be accurately determined. The predetermined value is preferably in a range of 10 to 300 mV per cell. In this case, the erroneous detection caused by noise can be reduced, and the mixing of a very small amount of air can be accurately determined. In addition, the predetermined value is more preferably in a range of 50 to 200 mV per cell. In this case, the erroneous detection caused by noise can be further reduced, and the mixing of a very small amount of air can be more accurately determined. In this manner, the cell voltage is measured by using the voltage measurement unit, so that it is possible to estimate the mixing of the air into the anode catalyst layer 26 simply and easily with low cost in comparison with a detection unit such as an oxygen sensor.

The dry gas where hydrogen is not substantially included is charged in the dry gas bomb 300. The humidity of the dry gas is adjusted by the temperature/humidity setting unit 210, so that the dry gas is supplied as the humidity-adjusted gas. The humidity-adjusted gas denotes a gas of which the relative humidity is less than 100% under the temperature condition of the anode catalyst layer 26 or the cathode catalyst layer 30 during the operation. Although the relative humidity of the humidity-adjusted gas which is less than 100% is allowable, in order to improve durability of the anode catalyst layer 26 and the cathode catalyst layer 30 by suppressing a decreasing rate of the electro chemical surface area (ECSA), the relative humidity of the humidity-adjusted gas is preferably in a range of 0 to 80%, more preferably in a range of 0 to 70%. As an example of the humidity-adjusted gas, if a gas does not exert bad influence on a reaction or durability of the fuel cell system 10, any gas may be used, which contains the air of which the relative humidity is lower than the relative humidity of the gases which are in contact with the anode catalyst layer 26 and the cathode catalyst layer 30. As an example of the dry gas, an inert gas is preferred. However, for example, a raw fuel such as propane or a city gas may be used for the anode catalyst layer 26 or the cathode catalyst layer 30, or a non-humidified air may be used for the cathode catalyst layer 30. This point will be described later in the second embodiment. In addition, if the later-described control may be performed, the relative humidity of the humidity-adjusted gas is preferably lower than the relative humidity of a gas which is in contact with the one of the anode catalyst layer 26 and the cathode catalyst layer 30 where the control is performed. In addition, if the reaction in the fuel cell 100 is not hindered, the relative humidity is not limited.

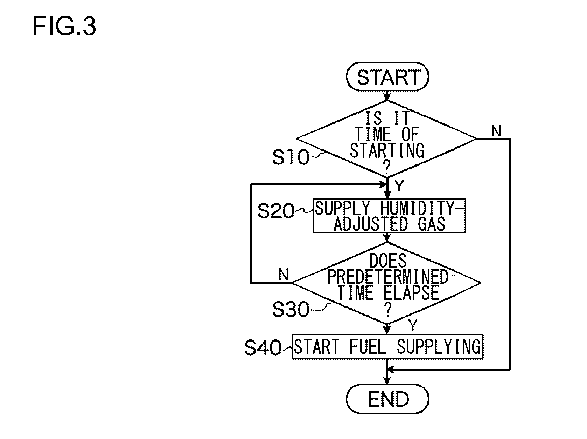

FIG. 3 is a flowchart illustrating control for adjusting a relative humidity according to the first embodiment. First, the temperature/humidity setting unit 210 determines whether or not the fuel cell system 10 is at the time of starting, that is, whether or not the power supply of the fuel cell system 10 is turned on and a fuel is to be supplied to the anode 122 and the cathode 124 (S10).

In the case where the temperature/humidity setting unit 210 determines that the fuel cell system 10 is at the time of starting (Y of S10), the supplying of the humidity-adjusted gas is started. More specifically, the temperature/humidity setting unit 210 controls the anode pipe valve 308 so that the path from the fuel moisture/heat exchanger 60 to the anode 122 is in a closed state and the anode side bypass 304 from the dry gas bomb 300 to the anode 122 is in an opened state. In addition, the temperature/humidity setting unit 210 controls the cathode pipe valve 310 so that the path from the oxidant moisture/heat exchanger 70 to the cathode 124 is in a closed state and the cathode side bypass 306 from the dry gas bomb 300 to the cathode 124 is in an opened state. Therefore, the humidity-adjusted gas of which the temperature is adjusted by using the temperature regulator 302 is supplied (S20). As a result, the relative humidity of the two gases which are in contact with the anode catalyst layer 26 and the cathode catalyst layer 30, respectively, can be decreased down to a desired value.

In the case where the temperature/humidity setting unit 210 determines that a predetermined time elapses from the starting of the supplying of the humidity-adjusted gas (Y of S30), the supplying of the humidity-adjusted gas is stopped. More specifically, the temperature/humidity setting unit 210 controls the anode pipe valve 308 so that the path from the fuel moisture/heat exchanger 60 to the anode 122 is in an opened state and the anode side bypass 304 from the dry gas bomb 300 to the anode 122 is in a closed state. In addition, the temperature/humidity setting unit 210 controls the cathode pipe valve 310 so that the path from the oxidant moisture/heat exchanger 70 to the cathode 124 is in an opened state and the cathode side bypass 306 from the dry gas bomb 300 to the cathode 124 is in a closed state. Herein, the predetermined time denotes a sufficient time which elapses after the relative humidity and temperatures of the humidity-adjusted gases which are supplied to the anode catalyst layer 26 and the cathode catalyst layer 30 are substantially equal to the relative humidity and temperatures of the gases which are in contact with the anode catalyst layer 26 and the cathode catalyst layer 30. After that, the fuel moisture/heat exchanger 60, the oxidant moisture/heat exchanger 70, and the like are controlled, so that the supplying of the fuel is started (S40).

On the other hand, in the case where the temperature/humidity setting unit 210 determines that the fuel cell system 10 is not at the time of starting (N of S10), the temperature/humidity setting unit 210 does not control the anode pipe valve 308, the cathode pipe valve 310, and the temperature regulator 302, and the process is ended. In addition, in the case where the temperature/humidity setting unit 210 determines that a predetermined time does not elapse from the starting of the supplying of the humidity-adjusted gas (N of S30), the humidity-adjusted gas continues to be supplied in the state where the opened/closed states of the anode pipe valve 308 and the cathode pipe valve 310 are maintained (S20).

In this manner, the humidity-adjusted gases are supplied to the anode catalyst layer 26 and the cathode catalyst layer 30 under the control of the temperature/humidity setting unit 210, so that the relative humidity of the gases which are in contact with the anode catalyst layer 26 and the cathode catalyst layer 30 are decreased at the time of starting the fuel cell system 10. In addition, if necessary, the temperature of the humidity-adjusted gas is changed by using the temperature regulator 302, so that the temperatures of the anode catalyst layer 26 and the cathode catalyst layer 30 are adjusted.

More specifically, the temperature/humidity setting unit 210 adjusts the relative humidity, so that it is possible to suppress the occurrence of a reverse current in the anode catalyst layer 26 and the cathode catalyst layer 30 as described above. Therefore, peeling of platinum (Pt) or the like as a material constituting the anode catalyst layer 26 and the cathode catalyst layer 30 from the catalyst layer can be greatly suppressed. As a result, even after the starting and stopping of the fuel cell system 10 are repeated, for example, 10,000 times, the decreasing rate of the electro chemical surface area (ECSA) can be suppressed to be a desired value (for example, less than 35%), so that it is possible to remarkably improve the durability of the anode catalyst layer 26 and the cathode catalyst layer 30.

Herein, in the case where the temperature/humidity setting unit 210 adjusts the relative humidity and temperature (if necessary) of the dry gas which is charged in the dry gas bomb 300 by using the temperature regulator 302, it is preferable that the relative humidity (x) and temperature be adjusted so that the relation between the relative humidity (x) of the gas which is in contact with the anode catalyst layer 26 or the cathode catalyst layer 30 of which the relative humidity is adjusted and the decreasing rate (y) of the electro chemical surface area satisfies the following Formulas I to III. The details of the adjustment will be described later.

$$0.2302e^{0.0499x} \leq y \leq 0.3013e^{0.056x} \text{ (Formula I)}$$

$$x < 100 \text{ (Formula II)}$$

$$0 < y < 35 \text{ (Formula III)}$$

In addition, the decreasing rate (y) is set to be in a range of $0 < y < 35$, so that a decrease in electro chemical surface area can be suppressed. As a result, a decrease in voltage (mV) can be greatly suppressed. More preferably, the decreasing rate (y) is set to be in a range of $0 < y < 20$. In this case, a decrease in voltage (mV) can be further suppressed. Furthermore preferably, the decreasing rate (y) is set to be in a range of $0 < y < 5$. In this case, a decrease in voltage (mV) rarely occurs.

In general, in order to reduce the decreasing rate (y) of the electro chemical surface area, it is preferable that the relative humidity and the temperature be as low as possible. However, in general, the temperature and the relative humidity have a relation therebetween in that, if the temperature is increased, the relative humidity is rapidly decreased. Therefore, the relative humidity may be decreased by allowing the temperature/humidity setting unit 210 to slightly increase the temperature by using the temperature regulator 302. Accordingly, at the time of starting the fuel cell system 10, in the anode catalyst layer 26 and the cathode catalyst layer 30, it is possible to remarkably suppress a deterioration of a material constituting the catalyst layer caused by the occurrence of a reverse current.

In addition, the aforementioned Formulas I to III relates to the cases where the relative humidity of the gases which are in contact with the anode catalyst layer 26 and the cathode catalyst layer 30 are controlled mainly in a range of 40°C to 85°C. However, the decreasing rate (y) of the electro chemical surface area may be reduced by controlling the anode catalyst layer 26 and the cathode catalyst layer 30 in a range other than the aforementioned range.

More specifically, in the case where the starting and stopping of the fuel cell system 10 are performed in the state where the temperature of at least one of the anode catalyst layer 26 and the cathode catalyst layer 30 is more than 85°C by suppressing the cooling, for example, according to the cooling water passing through the cooling water plate 190, it may be considered that, if the relative humidity (x) is the same, the decreasing rate (y) of the electro chemical surface area is increased in comparison with the case where the temperature is equal to or less than 85°C. Therefore, in the case where the control is performed at the temperature of more than 85°C, in comparison with the case where the control is performed at the temperature of equal to or less than 85°C, the relative humidity of the to-be-supplied humidity-adjusted gas needs to be further decreased.

Therefore, the relative humidity of the dry gas charged in the dry gas bomb 300 is set to be lower than a typical value in advance or a dehumidifying mechanism is provided to the anode side bypass 304, the cathode side bypass 306, or an inner portion of the fuel cell 100, so that the relative humidity of the humidity-adjusted gases which are to be supplied to the anode catalyst layer 26 and the cathode catalyst layer 30 may be further decreased. Therefore, the decreasing rates (y) of the electro chemical surface area of the anode catalyst layer 26 and the cathode catalyst layer 30 can be further reduced. In addition, in the case where the control is performed at the temperature of, for example, more than 85°C, the relative humidity of the to-be-supplied humidity-adjusted gas is further decreased by further heating the dry gas under the temperature adjustment of the temperature regulator 302, so that the decreasing rate (y) of the electro chemical surface area can be reduced down to a desired value.

Accordingly, the fuel cell system 10 can be started at a higher temperature, so that the decreasing rates (y) of the electro chemical surface area of the anode catalyst layer 26 and the cathode catalyst layer 30 can be greatly reduced without decreasing the temperature of the fuel cell 100 at the end of starting.

On the other hand, in the case where at least one of the anode catalyst layer 26 and the cathode catalyst layer 30 is controlled at the temperature of less than 40°C, if the relative humidity (x) is the same, the decreasing rate (y) of the electro chemical surface area can be set to be low in comparison with the case where the control is performed at the temperature of equal to or more than 40°C. However, in comparison with the case where the temperature of the supplied dry gas is controlled by the temperature regulator 302 to be equal to or more than 40°C, the decreasing rate (y) needs to be adjusted to be further decreased. Therefore, the temperature of the dry gas supplied from the dry gas bomb 300 may be further decreased by the temperature regulator 302. In this case, the temperature regulator 302 is used in parallel to the aforementioned cooling water circulation system 250, so that the relative humidity and temperatures of the gases which are in contact with the anode catalyst layer 26 and the cathode catalyst layer 30 may be controlled.

In addition, in the first embodiment, the supplying time of the humidity-adjusted gases is set to be a predetermined time in advance, and the humidity-adjusted gas is supplied until the relative humidity and temperature of the to-be-supplied humidity-adjusted gases are substantially equal to the relative humidity and temperatures of the anode catalyst layer 26 and the cathode catalyst layer 30. Alternatively, a temperature/humidity sensor for measuring at least one of the relative humidity and temperatures of the gases which are in contact with the anode catalyst layer 26 and the cathode catalyst layer 30 is installed in the fuel cell 100, and a measured value of the temperature/humidity sensor is transmitted to the control unit 200, so that the humidity-adjusted gases may be supplied until the relative humidity and temperatures of the anode catalyst layer 26 and the cathode catalyst layer 30 becomes desired values. In addition, the temperature/ humidity setting unit 210 controls at least one of the relative humidity and temperature based on the measurement result of the temperature/humidity sensor, and after that, the humidity-adjusted gases may be supplied to the fuel cell 100.

In addition, the adjustment unit may be a unit for controlling only one of the anode catalyst layer 26 and the cathode catalyst layer 30. Similarly, the temperature regulator 302 may adjust the relative humidity of only one of the gases which are in contact with the anode catalyst layer 26 and the cathode catalyst layer 30. In addition, the temperature regulator 302 may be shared to be used by the anode catalyst layer 26 and the cathode catalyst layer 30. However, the temperature regulator 302 may be installed in at least one of the anode catalyst layer 26 and the cathode catalyst layer 30 or separately in each thereof. In addition, the temperature regulator 302 may have any one of a temperature adjusting function for the dry gas and a dehumidifying function for the dry gas.

In addition, in the embodiment, the anode side bypass 304 and the cathode side bypass 306 are used for supplying the humidity-adjusted gases. However, the humidity-adjusted gases may be supplied to the anode catalyst layer 26 and the cathode catalyst layer 30 in other ways. In addition, the temperature regulator 302 may have a dehumidifying function for the to-be-supplied humidity-adjusted gases or the gases which are in contact with the anode catalyst layer 26 and the cathode catalyst layer 30.

(Second Embodiment)

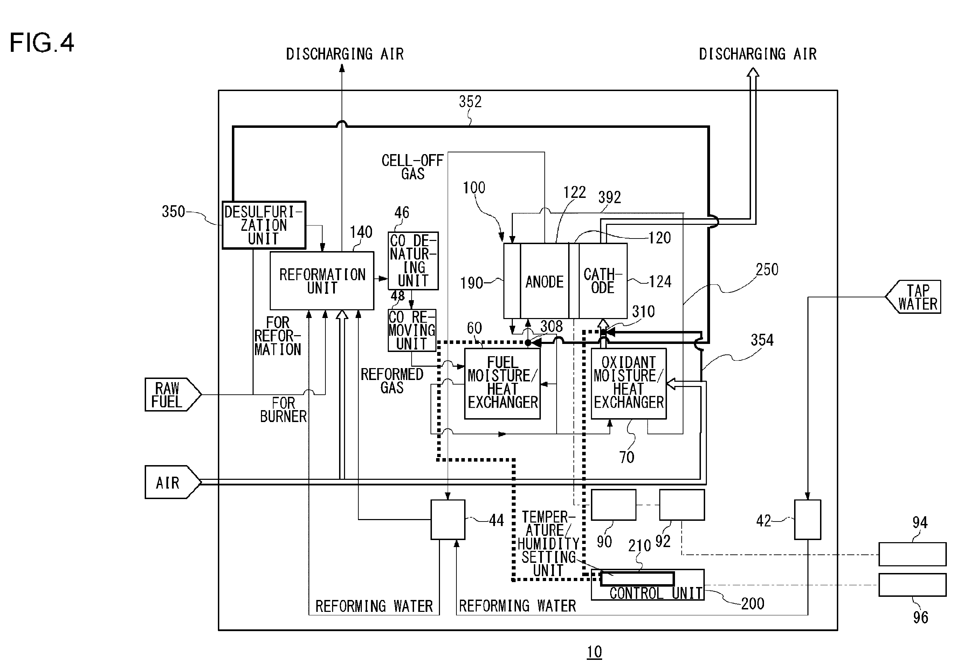

FIG. 4 is a schematic diagram illustrating an overall configuration of a fuel cell system according to a second embodiment. The description of the same portions as those of FIG. 1 is not repeated, and only the portions different from those of FIG. 1 are described. In the second embodiment, a desulfurized raw fuel and a non-humidified air are supplied as the humidity-adjusted gases.

More specifically, the desulfurized raw fuel is supplied to the anode catalyst layer 26 in the anode 122 by using an anode side bypass 352, and the non-humidified air is supplied to the cathode catalyst layer 30 in the cathode 124 by using a cathode side bypass 354. The raw fuel contains a sulfur compound, so that the anode catalyst layer 26 may be poisoned. Therefore, preferably, a desulfurization unit 350 is installed, so that the sulfur component contained in the before-reformation raw fuel is removed, and after that, the raw fuel is supplied as the humidity-adjusted gas. In order to prevent the deterioration in performance of the anode catalyst layer 26 caused by the attachment of the sulfur component, it is preferable that the sulfur component is set to be equal to or less than 20 ppb (parts per billion). In addition, more preferably, the sulfur component is set to be equal to or less than 10 ppb. Therefore, the influence of the sulfur component on the anode catalyst layer 26 can be further reduced. In addition, most preferably, the sulfur component is set to be equal to or less than 5 ppb. Therefore, the influence of the sulfur component on the anode catalyst layer 26 can be substantially removed. As an example of the sulfur component, there are sulfur components contained in tertiary-butylmercaptan, ethylmercaptan, dimethyl sulfide, or the like used as an odorant. As an example of the raw fuel, an liquefied petroleum gas (LP gas), a propane gas, a city gas, hydrogen gas, or the like may be used. The non-humidified air is supplied through the cathode side bypass 354 to the cathode catalyst layer 30 without humidifying of the oxidant moisture/heat exchanger 70.

The temperature/humidity setting unit 210 controls the anode pipe valve 308, so that opened/closed states of a path from the fuel moisture/heat exchanger 60 to the anode 122 and the anode side bypass 352 from the desulfurization unit 350 to the anode 122 are exclusively controlled. In addition, the temperature/humidity setting unit 210 controls the cathode pipe valve 310, so that opened/closed states of a path from the oxidant moisture/heat exchanger 70 to the cathode 124 and the cathode side bypass 354 are exclusively controlled.

In addition, a bypass for supplying the raw fuel desulfurized by the desulfurization unit 350 may be installed in the cathode 124. In addition, the control may be performed by the temperature/humidity setting unit 210 so that the raw fuel is used as the humidity-adjusted gas for the anode 122 and the non-humidified air is used as the humidity-adjusted gas for the cathode 124. However, the control may be performed by the temperature/humidity setting unit 210 so that only one thereof is used as the humidity-adjusted gas. In addition, at least one of the raw fuel and the non-humidified air is supplied, and the dry gas which does not substantially contain hydrogen by using the dry gas bomb 300 according to the first embodiment is supplied, so that the control may be performed by the temperature/humidity setting unit 210.

(Third Embodiment)

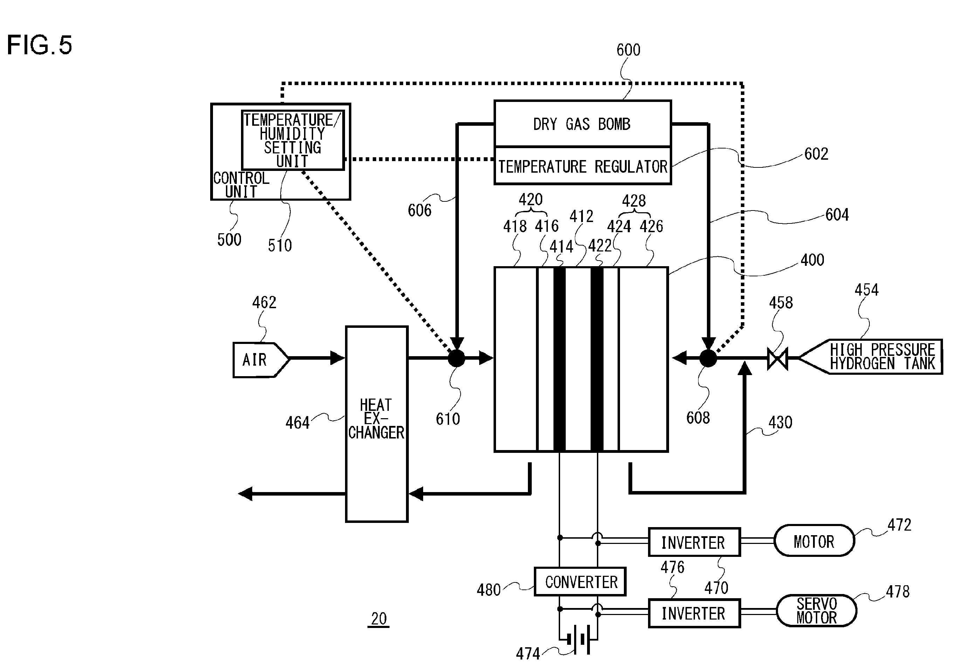

FIG. 5 is a schematic diagram illustrating an overall configuration of a fuel cell system 20 according to a third embodiment. In the third embodiment, there is provided an in-vehicle fuel cell system 20 including a solid polymer type fuel cell 400. The fuel cell 400 includes an anode 422, a cathode 414 and a solid polymer electrolyte membrane 412 interposed between the anode 422 and the cathode 414. The anode 422 and the cathode 414 include an anode catalyst layer (not illustrated) and a cathode catalyst layer (not illustrated), respectively. An anode side diffusion layer 428 is disposed at the anode 422 side with the solid polymer electrolyte membrane 412 interposed therebetween, and the anode side diffusion layer 428 includes an anode side water management layer 424 and an anode side substrate 426. In addition, a cathode side diffusion layer 420 is disposed at the cathode 414 side, and the cathode side diffusion layer 420 includes a cathode side water management layer 416 and an anode side substrate 418.

In the in-vehicle fuel cell system 20, pure hydrogen stored in a high pressure hydrogen tank 454 through a hydrogen charging opening (not illustrated) from an outer portion is supplied as a fuel to the anode 422. In addition, a fuel which is not contributed to electricity generation in the anode 422 is exhausted from the fuel cell 400 and is supplied through the path 430 to the anode 422 by a hydrogen pump (not illustrated) again. A pressure regulator 458 is installed in a fuel supplying path connecting the high pressure hydrogen tank 454 and the fuel cell 400. The pressure regulator 458 adjusts a pressure of the fuel supplied from the high pressure hydrogen tank 454 to the fuel cell 400 and adjusts the pressure so that the fuel which is exhausted from the fuel cell 400 and is circulating does not counerflow to the high pressure hydrogen tank 454.

On the other hand, a compressed air 462 is supplied from an outer portion to the cathode 414. At this time, the air 462 exchanges heat with the exhausted air exhausted from the cathode 414 by using a heat exchanger 464 which is a total heat exchanger. In the fuel cell 400, since water is generated from the cathode 414 due to the electricity generation, heat exchange can be performed on sensible heat and latent heat in the heat exchanger 464. The heat exchanger 464 is configured as a humidifying unit of the cathode 414 side. The DC power generated by the fuel cell 400 is supplied through an inverter 470 to a motor 472 of a vehicle so as to be a driving source of the vehicle. In addition, the generated DC power may be converted into a DC power having a predetermined voltage (for example, 24 V) by a converter 480, and after that, it may be converted into an AC power (for example, 100V) by an inverter 476 so as to be supplied to a servo motor 478 of the vehicle. In addition, in the fuel cell system 20, in order to cope with the time of starting of the vehicle or a rapid change in load, in generally, a secondary battery 474 or the like is connected, so that a hybrid system of the fuel cell 400 and the secondary battery 474 is configured.

In addition, a temperature/humidity setting unit 510 for controlling the relative humidity and temperatures of the anode catalyst layer and the cathode catalyst layer is installed in a control unit 500. The temperature/humidity setting unit 510, a dry gas bomb 600, a temperature regulator 602, an anode side bypass 604, a cathode side bypass 606, an anode pipe valve 608, and a cathode pipe valve 610 are collectively called an adjustment unit. The temperature/humidity setting unit 510 adjusts the relative humidity and temperatures of the anode catalyst layer and the cathode catalyst layer by using the adjustment unit including the dry gas bomb 600, the temperature regulator 602, the anode side bypass 604, the cathode side bypass 606, the anode pipe valve 608, and the cathode pipe valve 610.

Similarly to the fuel cell system 10 according to the first embodiment, the temperature/humidity setting unit 510 supplies the humidity-adjusted gas, which is a dry gas of which the humidity is adjusted, through the anode side bypass 604 and the cathode side bypass 606 to at least one of the anode catalyst layer constituting the anode 422 and the cathode catalyst layer constituting the cathode 414 by opening and closing the anode pipe valve 608 and the cathode pipe valve 610 at the time of starting. Sine the control of the dry gas bomb 600, the temperature regulator 602, the anode pipe valve 608, and the cathode pipe valve 610 performed by the control unit 500 is the same as the control in the fuel cell system 10 according to the first embodiment, the description thereof is not repeated.

Accordingly, in the in-vehicle fuel cell system 20, at the time of starting the fuel cell system 20, with respect to at least one of the anode catalyst layer and the cathode catalyst layer, it is possible to remarkably suppress a deterioration of a material constituting the catalyst layer caused by the occurrence of a reverse current.

(Example)

In the case where the starting and stopping of the fuel cell system 10 according to the first embodiment are repeated at a predetermined temperature, it is analyzed how the decreasing rates of the electro chemical surface area (ECSA) of the anode catalyst layer 26 and the cathode catalyst layer 30 change in comparison with the case where the starting and stopping are not performed. The membrane electrode assembly 50 of the fuel cell 100 was manufactured according to the following manufacturing method.

(Manufacturing Method) <Manufacturing of Cathode Catalyst Slurry>

As a cathode catalyst, platinum-cobalt carrying carbon (TEC36F52, manufactured by TANAKA KIKINZOKU KOGYO K.K.) was used; and as an ion exchange resin, Aciplex (registered trade mark) SS700/20 solution (20%, Ew = 780, manufactured by Asahi Kasei E Material Company) was used. 10 mL of ultrapure water was added to 5g of the platinum-cobalt carrying carbon, and stirring was performed. After that, 15 mL of ethanol was added. With respect to the catalyst dispersion solution, ultrasonic stirring dispersion was performed for one hour by using an ultrasonic stirrer. A predetermined Aciplex solution was diluted with an equal amount of ultrapure water, and stirring was performed for three minutes by using a glass rod. After that, ultrasonic dispersion was performed for one hour by using an ultrasonic cleaner, so that an Aciplex aqueous solution was obtained. Next, the Aciplex aqueous solution was slowly dropped to the catalyst dispersion solution. During the dropping, stirring was continuously performed by using an ultrasonic stirrer. After the end of dropping of a Nafion solution, dropping of 10g (weight ratio = 1:1) of a mixed solution of 1-propanol and 1-butanol was performed, and the resulting solution was used as catalyst slurry. During the mixing, all the temperatures of water are adjusted to be about 60°C, so that ethanol is evaporated to be removed.

<Manufacturing of Cathode>

The catalyst slurry was allowed to be coated on a water retention layer by screen printing (150 mesh). Drying was performed at a temperature of 80°C for three hours, and thermal treatment was performed at a temperature of 180°C for 45 minutes.

<Manufacturing of Anode>

Except for using the platinum ruthenium carrying carbon (TEC61 E54, manufactured by TANAKA KIKINZOKU KOGYO K.K.) as a catalyst, anode catalyst slurry manufactured in the same method as that of the aforementioned cathode catalyst slurry was allowed to be coated on a microporous-layer-attached gas diffusion layer manufactured by using Vulcan XC72 by screen printing (150 mesh). Drying was performed at a temperature of 80°C for three hours, and thermal treatment was performed at a temperature of 180°C for 30 minutes.

<Manufacturing of membrane electrode assembly>

Hot pressing was performed in a state where a solid polymer electrolyte membrane was interposed between the anode and the cathode which were manufactured in the aforementioned methods. As a solid polymer electrolyte membrane, Aciplex (registered trade mark) (SF7201x, manufactured by Asahi Kasei Chemicals) was used. The hot pressing was performed on the anode, the solid polymer electrolyte membrane, and the cathode in an attachment condition of 190°C and 100 seconds, so that a membrane electrode assembly was manufactured.

In addition, the thickness of the solid polymer electrolyte membrane was about 50 $\mu$m; the thickness of the cathode catalyst layer was about 20 $\mu$m; and the thickness of the anode catalyst layer was about 20 $\mu$m.

Examples 1 and 2 and Comparative Example 1 represent results of analysis of the relation between the times (number) of starting and stopping and the electro chemical surface area (ECSA) in the case where the relative humidity (RH) of the humidity-adjusted gases were fixed at 35%, 68%, and 100% and the starting and stopping were repeated. Comparative Example 1 corresponds to the result of measurement of the fuel cell system which does not include an adjustment unit for adjusting the relative humidity. In Examples 1 and 2 and Comparative Example 1, the temperatures of the anode catalyst layer and the cathode catalyst layer were fixed at 85°C, and the starting and stopping were repeated. In addition, an electrochemical measurement system (HZ-5000, manufactured by HOKUTO DENKO Corporation) was used for measuring the electro chemical surface area (ECSA); in the state where hydrogen ($H_2$) flew into the anode and

nitrogen ($N_2$) flew into the cathode, potential scanning was performed in a potential width of 0.05 V to 0.8 V at a scan speed of 5 mV/s; and the electro chemical surface area was calculated from electric energy of a hydrogen separated wave which was detected in a range from 0.05 V to 0.4 V.

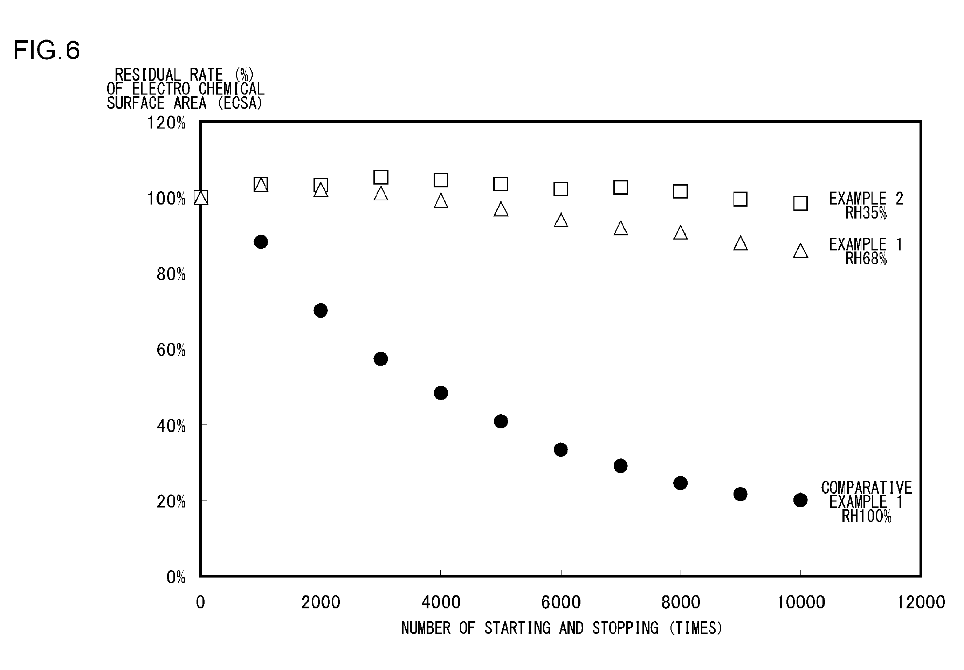

FIG. 6 is a graph illustrating a residual rate of the electro chemical surface area (ECSA) in the case where starting and stopping were performed predetermined times with respect to the fuel cell systems 10 according to Examples 1 and 2 and Comparative Example 1. In Comparative Example 1, as the repetition number of starting and stopping of the fuel cell system 10 was increased, the electro chemical surface area (ECSA) was rapidly decreased. More specifically, after starting and stopping 2000 times, the electro chemical surface area (ECSA) was about 70%; after starting and stopping 4000 times, the electro chemical surface area was less than 50%; and after starting and stopping 10000 times, the electro chemical surface area was about 20%. In other words, in Comparative Example 1, after starting and stopping 10000 times, the performance of the anode catalyst layer and the cathode catalyst layer was decreased to about 1/5 of the initial performance. On the other hand, in Example 1, although the repetition number of starting and stopping of the fuel cell system 10 was increased, only if the electro chemical surface area (ECSA) was slowly decreased, even after starting and stopping 10000 times, the electro chemical surface area (ECSA) was maintained to be about 85%. In addition, in Example 2, although the repetition number of starting and stopping the fuel cell system 10 was increased, the electro chemical surface area (ECSA) was not almost decreased; and even after starting and stopping 10000 times, the electro chemical surface area (ECSA) was maintained to be substantially the same as that of the catalyst layers of the case where the starting and stopping were not almost performed.

[Evaluation of Decreasing Rate of Electro Chemical Surface Area (ECSA)]

In the case where the starting and stopping of the fuel cell system 10 according to the first embodiment were repeated 10000 times at a predetermined temperature, the relation between the relative humidity (RH) and the decreasing rate of the electro chemical surface area (ECSA) was analyzed. Manufacturing method for the membrane electrode assembly 50 of the fuel cell 100 and the measurement method for the relative humidity (RH) and the electro chemical surface area (ECSA) were similar to those of Example 1, and thus, the description thereof was not repeated.
[Table 1]

| | Temperature (°C) | Relative Humidity (RH) | Decreasing Rate of ECSA (%) |
|---|---|---|---|
| Example 1 | 40°C | 18% | 0% |
| Example 2 | 40°C | 25% | 0% |
| Example 3 | 40°C | 60% | 3% |
| Example 4 | 40°C | 80% | 12% |
| Example 5 | 70°C | 2% | 0% |
| Example 6 | 70°C | 3% | 0% |
| Example 7 | 70°C | 4% | 0% |
| Example 8 | 70°C | 5% | 0% |
| Example 9 | 70°C | 7% | 0% |
| Example 10 | 70°C | 15% | 0% |
| Example 11 | 70°C | 25% | 0%. |
| Example 12 | 70°C | 38% | 1% |
| Example 13 | 70°C | 42% | 2% |
| Example 14 | 70°C | 52% | 4% |
| Example 15 | 70°C | 64% | 7% |
| Example 16 | 70°C | 81% | 22% |
| Example 17 | 85°C | 1% | 0% |
| Example 18 | 85°C | 6% | 0% |
| Example 19 | 8.5°C | 14% | 0% |

(continued)

|  | Temperature (°C) | Relative Humidity (RH) | Decreasing Rate of ECSA (%) |
|---|---|---|---|
| Example 20 | 85°C | 23% | 1% |
| Example 21 | 85°C | 28% | 2% |
| Example 22 | 85°C | 38% | 3% |
| Example 23 | 85°C | 40% | 3% |
| Example 24 | 85°C | 57% | 6% |
| Example 25 | 85°C | 68% | 15% |
| Example 26 | 85°C | 82% | 32% |
| Comparative Example 1 | 40°C | 100% | 3.5% |
| Comparative Example 2 | 70°C | 100% | 70% |
| Comparative Example 3 | 85°C | 100% | 80% |

Table 1 lists the relative humidity (RH) and the decreasing rates of the electro chemical surface area (ECSA) at predetermined temperatures. Examples 1 to 26 represent results of measurement of the decreasing rate (%) of the electro chemical surface area (ECSA) in the case where the humidity-adjusted gas having a predetermined humidity of less than 100% was supplied at a temperature of 40°C, 70°C, or 85°C. Comparative Examples 1 to 3 represent results of measurement of the decreasing rate (%) of the electro chemical surface area (ECSA) in the case where the humidity-adjusted gas having a relative humidity of 100% was supplied at a temperature of 40°C, 70°C, or 85°C. In addition, Comparative Example 1 corresponds to a result of the case where the starting and stopping were repeated by using a control method in the related art where the temperature was decreased from a temperature of about 70°C to 80°C to about 40°C at a relative humidity of 100%.

From the result, in Comparative Example 1 where the starting and stopping were repeated by using the control method in the related art where the temperature was decreased from 70°C to 40°C at the relative humidity of 100%, the decreasing rate (%) of the electro chemical surface area (ECSA) was low and about 35% in comparison with Comparative Example 2 and Comparative Example 2. In addition, in Examples 1 to 26 where the relative humidity was less than 100%, the decreasing rate (%) of the electro chemical surface area (ECSA) was lower than that of Comparative Examples 1 to 3 and was less than about 35%.

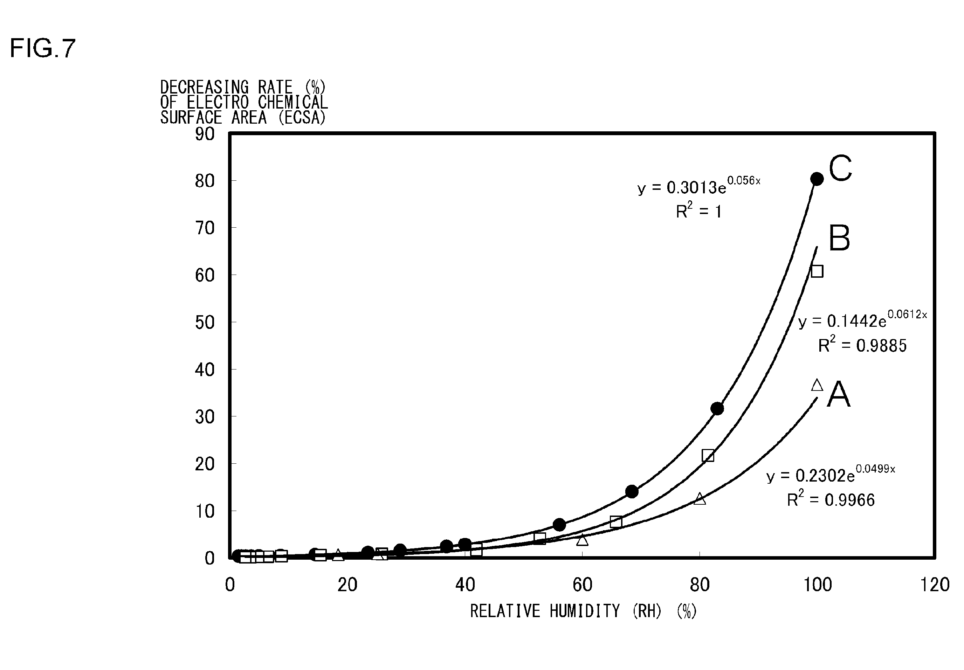

FIG. 7 is a graph illustrating relations between the relative humidity (RH) and the decreasing rate of the electro chemical surface area (ECSA) at predetermined temperatures. In other words, the graph illustrates the results of Table 1. Curve A in FIG. 7 is a regression curve obtained based on experiment results (Examples 1 to 4 and Comparative Example 1) of the relative humidity (RH) and the decreasing rate of the electro chemical surface area (ECSA) at a temperature of 40°C, wherein $y = 0.2302e^{0.0499x}$ ($R^2=0.9966$). Curve B in FIG. 7 is a regression curve obtained based on experiment results (Examples 5 to 16 and Comparative Example 2) of the relative humidity (RH) and the decreasing rate of the electro chemical surface area (ECSA) at a temperature of 70°C, wherein $y = 0.1442e^{0.0612x}$ ($R^2 = 0.9885$). Curve C in FIG. 7 is a regression curve obtained based on experiment results (Examples 17 to 26 and Comparative Example 3) of the relative humidity (RH) and the decreasing rate of the electro chemical surface area (ECSA) at a temperature of 85°C, wherein $y = 0.3013e^{0.056x}$ ($R^2 = 1.0000$).

It is clarified from the result that, in general, as relative humidity is decreased, the decreasing rate of the electro chemical surface area (ECSA) is decreased, and as the temperature is decreased, the decreasing rate of the electro chemical surface area (ECSA) is decreased.

In addition, in order to further decrease the decreasing rate of the electro chemical surface area (ECSA) in comparison with Comparative Examples 1 to 3 (the minimum value of the decreasing rate of the electro chemical surface area (ECSA) was y = 35% at the relative humidity of 100%), in the case where the temperature regulator 302 adjusts the temperature of the dry gas charged in the dry gas bomb 300, it is preferable that the relative humidity (x) and the temperature be adjusted so that the relation between the relative humidity (x) of the anode catalyst layer or the cathode catalyst layer of which the relative humidity is adjusted and the decreasing rate (y) of the electro chemical surface area satisfies the following Formulas I to III.

$$0.2302e^{0.0499x} \le y \le 0.3013e^{0.056x} \text{ (Formula I)}$$

$$x < 100 \text{ (Formula II)}$$

$$0 < y < 35 \text{ (Formula III)}$$

In this case, the relative humidity of the to-be-supplied humidity-adjusted gas may be less than 100%. However, the relative humidity is preferably in a range of 0 to 80%, more preferably in a range of 0 to 70%.

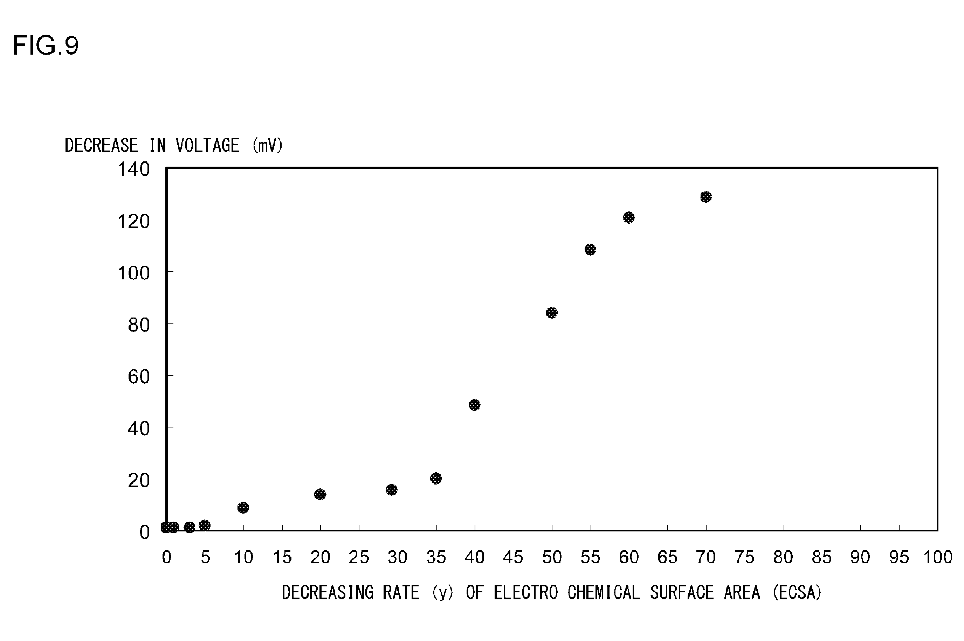

FIG. 9 is a graph illustrating a relation between the decreasing rate (y) of the electro chemical surface area and a decrease in voltage (mV) after 2000 times of starting and stopping. Experiment was performed by changing the humidity so that the decreasing rate (y) of the electro chemical surface area becomes each value of the horizontal axis.

From the result, in the case where the decreasing rate (y) was $35 \le y$, the decrease in voltage (mV) remarkably proceeded in comparison with the case before 2000 times of starting and stopping. On the other hand, in the case where the decreasing rate (y) was 0 < y < 35, the decrease in electro chemical surface area can be suppressed, so that the decrease in voltage (mV) was greatly suppressed. In the case where the decreasing rate (y) was 0 < y < 20, the decrease in voltage (mV) was further suppressed. Particularly, in the case where the decreasing rate (y) was 0 < y < 5, the decrease in voltage (mV) rarely occurs.

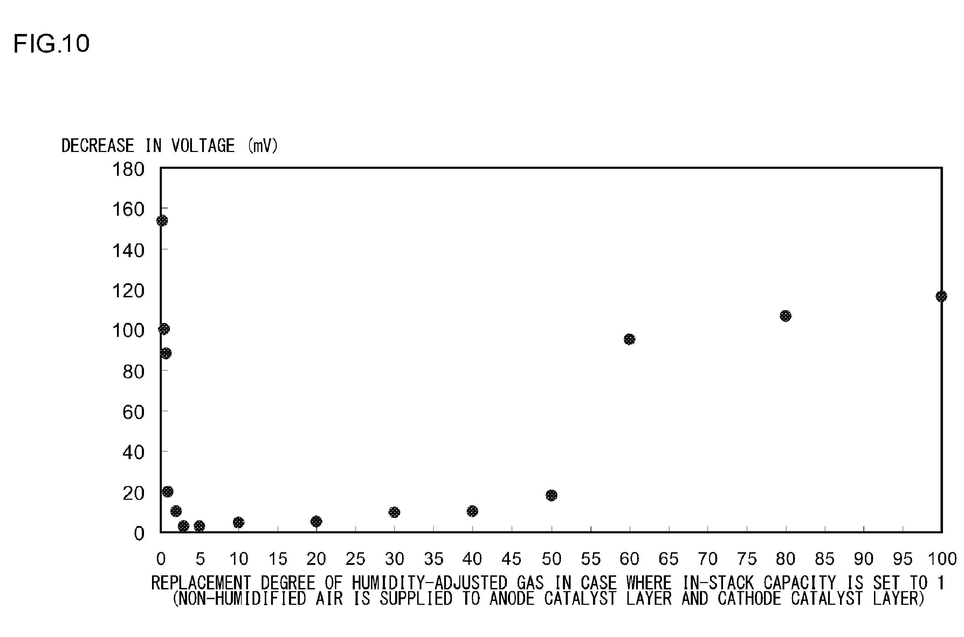

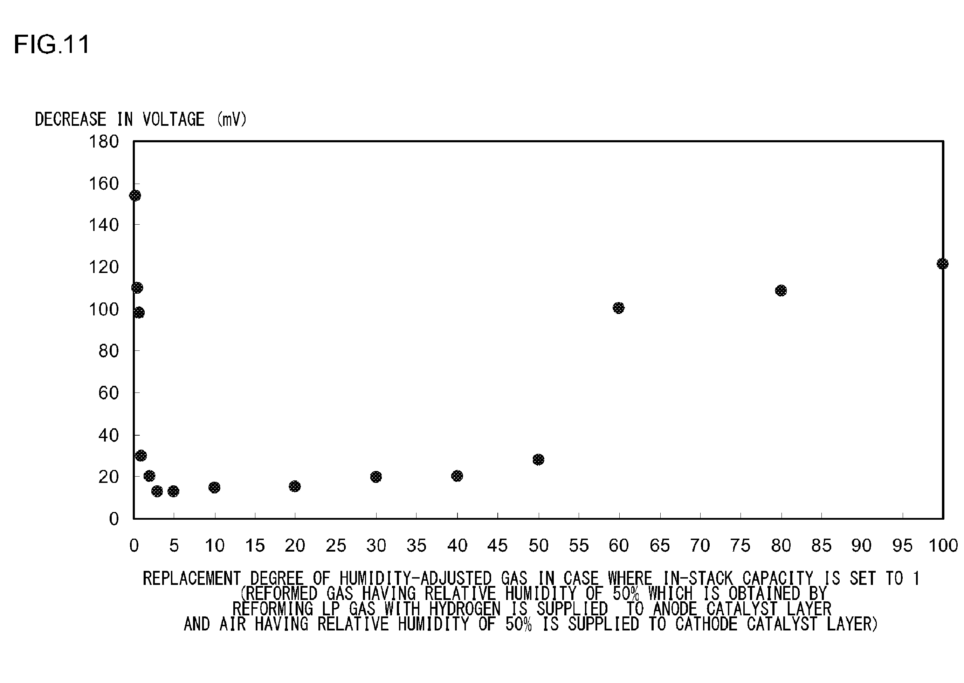

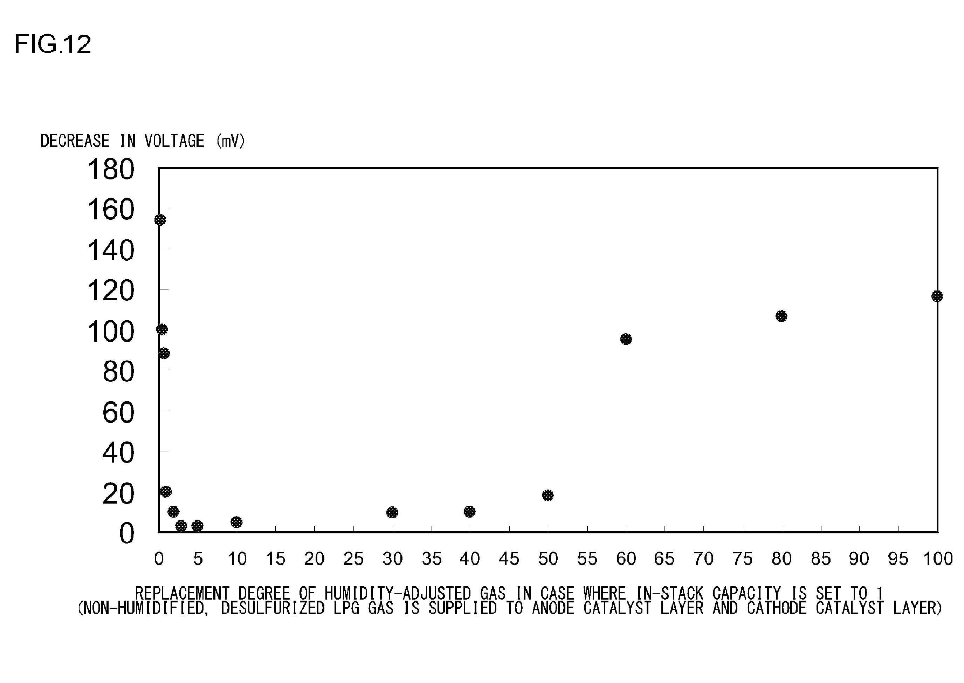

FIG. 10 is a graph illustrating a relation between a replacement degree of the humidity-adjusted gas (a non-humidified air being supplied to both of the anode catalyst layer and the cathode catalyst layer) and a decrease in voltage (mV) in the case where the in-stack capacity after 2000 times of starting and stopping was set to 1. FIG. 11 is a graph illustrating a relation between a replacement degree of the humidity-adjusted gas (a reformed gas having a relative humidity of 50% which was obtained by reforming LP gas with hydrogen being supplied to the anode catalyst layer and air having a relative humidity of 50% being supplied to the cathode catalyst layer) and a decrease in voltage (mV) in the case where the in-stack capacity after 2000 times of starting and stopping was set to 1. FIG. 12 is a graph illustrating a relation between a replacement degree of the humidity-adjusted gas (a non-humidified, desulfurized, LPG gas being supplied to both of the anode catalyst layer and the cathode catalyst layer) and a decrease in voltage (mV) in the case where the in-stack capacity after 2000 times of starting and stopping was set to 1. In addition, at the time of stopping, the all cell temperatures of the fuel cells were 50°C. In addition, in FIG. 12, the sulfur concentration in the desulfurized LPG gas was equal to or less than 1 ppb.

In FIGS. 10 to 12, if the supplying amount of the humidity-adjusted gas to the fuel cell was denoted by L, and if the capacity (in-stack capacity) from the time of introduction of the humidity-adjusted gas into the gas passage of the fuel cell or the fuel-supplying manifold (not shown) to the time of exhaustion thereof was set to 1, in the case where the supplying amount was L < 1, the decrease in voltage (mV) remarkably proceeded in comparison with the case before 2000 times of starting and stopping. It may be understood that, this was because the gas in the fuel cell was not sufficiently replaced and the deterioration of a material constituting the catalyst layer could not be suppressed. In addition, even in the case where the supplying amount was $50 \le L$, the decrease in voltage (mV) proceeds. It may be understood that, this was because the moisture in the membrane electrode assembly was decreased so that the membrane electrode assembly was dried, and thus, the durability of the membrane electrode assembly was deteriorated.

On the other hand, in the case where the supplying amount was $1 \le L < 50$, the decrease in voltage (mV) of the fuel cell was remarkably suppressed in comparison with the case where the supplying amount was L < 1 or the case where the supplying amount was $50 \le L$. In addition, in the case where the supplying amount was $2 \le L < 20$, the decrease in voltage (mV) of the fuel cell was further suppressed. In addition, in the case where the supplying amount was $3 \le L < 10$, the decrease in voltage (mV) of the fuel cell rarely occured.

The present invention is not limited to the aforementioned embodiments, but various changes in design or modifications can be made based on knowledge of the skilled persons in the art. The embodiments added with modifications can also be included in the scope of the present invention.

DESCRIPTION OF REFERENCE NUMERALS

	10, 20: Fuel cell system,
	26: Anode catalyst layer,
	30: Cathode catalyst layer,
	100, 400: Fuel cell,
	122, 414: Anode,
	124, 422: Cathode,

200, 500: Control unit,
300, 600: Dry gas bomb,
120, 412: Solid polymer electrolyte membrane,
302, 602: Temperature regulator,
304, 606: Anode side bypass,
306, 604: Cathode side bypass

INDUSTRIAL APPLICABILITY

The present invention can be used for a fuel cell system including a fuel cell which generates electricity through an electrochemical reaction of hydrogen and oxygen.

**Claims**

1.  A fuel cell system comprising:

    a fuel cell configured to include an electrolyte membrane, an anode which is disposed on one surface of the electrolyte membrane and includes an anode catalyst layer, and a cathode which is disposed on the other surface of the electrolyte membrane and includes a cathode catalyst layer; and
    an adjustment unit which allows at least one of a relative humidity of a gas which is in contact with the anode catalyst layer and a relative humidity of a gas which is in contact with the cathode catalyst layer to be decreased to less than 100% during at least one of a period of time of stopping the fuel cell, a period of time after introducing of a raw fuel before starting of electricity generation, or a period of time after starting of electricity generation until output power becomes rating power.

2.  The fuel cell system according to claim 1, wherein
    the adjustment unit further includes a function of adjusting a temperature, and
    the adjustment unit adjusts the relative humidity (x) and the temperature during at least one of a period of time of stopping the fuel cell, a period of time after introducing of a raw fuel before starting of electricity generation, or a period of time after starting of electricity generation until output power becomes rating power, with respect to at least one of the relative humidity of the gas which is in contact with the anode catalyst layer and the relative humidity of the gas which is in contact with the cathode catalyst layer and, if necessary, at least one of the temperature of the gas which is in contact with the anode catalyst layer and the temperature of the gas which is in contact with the cathode catalyst layer, so that a relation between the relative humidity (x) and the decreasing rate (y) of the electro chemical surface area of the gas which is in contact with the anode catalyst layer or the cathode catalyst layer of which the relative humidity is adjusted satisfies the following Formulas I to III:

$$0.2302e^{0.0499x} \leq y \leq 0.3013e^{0.056x} \text{ (Formula I)}$$

$$x < 100 \text{ (Formula II)}$$

$$0 < y < 35 \text{ (Formula III)}.$$

3.  The fuel cell system according to claim 1 or 2, wherein
    the adjustment unit supplies a gas, of which the relative humidity is less than 100%, to at least one of the anode and cathode of which the relative humidity are adjusted, so that at least one of the relative humidity of the gas which is in contact with the anode catalyst layer and the relative humidity of the gas which is in contact with the cathode catalyst layer is decreased to less than 100%.

4.  The fuel cell system according to any one of claims 1 to 3, further comprising a voltage measurement unit which continuously measures an output voltage of the fuel cell, wherein
    the adjustment unit adjusts the relative humidity (x) and the temperature when a difference between a reference value and an output voltage measured by the voltage measurement unit is equal to or larger than a predetermined value.

**5.** The fuel cell system according to any one of claims 1 to 4, wherein
the adjustment unit is connected through a bypass path to the fuel cell.

**6.** The fuel cell system according to claim 5, further comprising:

a raw fuel supplying unit; and
a desulfurization unit which removes a sulfur component of a raw fuel supplied from the raw fuel supplying unit, wherein
the bypass path is a path which supplies the raw fuel, which is supplied from the raw fuel supplying unit and desulfurized down to 20 ppb or less by the desulfurization unit, to at least one of the anode catalyst layer and the cathode catalyst layer.

**7.** The fuel cell system according to claims 5 or 6, wherein
the adjustment unit supplies non-humidified air through the bypass path to the cathode catalyst layer.

FIG.1

FIG.2

FIG.3

FIG.4

EP 2 555 299 A1

FIG.5

EP 2 555 299 A1

FIG.6

FIG.7

DECREASING RATE (%) OF ELECTRO CHEMICAL SURFACE AREA (ECSA)

RELATIVE HUMIDITY (RH) (%)

$y = 0.3013e^{0.056x}$
$R^2 = 1$

$y = 0.1442e^{0.0612x}$
$R^2 = 0.9885$

$y = 0.2302e^{0.0499x}$
$R^2 = 0.9966$

EP 2 555 299 A1

## FIG.8

FIG.9

DECREASE IN VOLTAGE (mV)

DECREASING RATE (y) OF ELECTRO CHEMICAL SURFACE AREA (ECSA)

EP 2 555 299 A1

FIG.10

DECREASE IN VOLTAGE (mV)

REPLACEMENT DEGREE OF HUMIDITY-ADJUSTED GAS IN CASE WHERE IN-STACK CAPACITY IS SET TO 1
(NON-HUMIDIFIED AIR IS SUPPLIED TO ANODE CATALYST LAYER AND CATHODE CATALYST LAYER)

EP 2 555 299 A1

FIG.11

FIG.12

DECREASE IN VOLTAGE (mV)

REPLACEMENT DEGREE OF HUMIDITY-ADJUSTED GAS IN CASE WHERE IN-STACK CAPACITY IS SET TO 1
(NON-HUMIDIFIED, DESULFURIZED LPG GAS IS SUPPLIED TO ANODE CATALYST LAYER AND CATHODE CATALYST LAYER)

<div align="center">**INTERNATIONAL SEARCH REPORT**</div>

| | International application No. |
|---|---|
| | PCT/JP2011/001947 |

**A. CLASSIFICATION OF SUBJECT MATTER**
*H01M8/04*(2006.01)i, *H01M8/10*(2006.01)n

According to International Patent Classification (IPC) or to both national classification and IPC

**B. FIELDS SEARCHED**

Minimum documentation searched (classification system followed by classification symbols)
H01M8/00-8/24

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2009-70576 A  (Toyota Motor Corp.),<br>02 April 2009 (02.04.2009),<br>paragraphs [0041] to [0043], [0046] to [0061],<br>[0066] to [0079], [0086]; fig. 1 to 6<br>(Family: none) | 1,3,5,7<br>4,6<br>2 |
| Y | JP 2007-59129 A  (Nissan Motor Co., Ltd.),<br>08 March 2007 (08.03.2007),<br>paragraphs [0024], [0053] to [0058]<br>(Family: none) | 4,6 |
| Y | JP 9-320625 A  (Toshiba Corp.),<br>12 December 1997 (12.12.1997),<br>paragraph [0021]; fig. 1<br>(Family: none) | 6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April, 2011 (20.04.11) | 10 May, 2011 (10.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/001947 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-505074 A (Toshiba Corp.), 03 September 1992 (03.09.1992), page 2, upper right column, line 1 to lower left column, line 20; page 3, upper left column, line 11 to lower left column, line 8 & US 5045414 A  & EP 461248 A & WO 1991/010266 A2  & CA 2048666 A1 | 1-7 |

Form PCT/ISA/210 (continuation of second sheet) (July 2009)

**EP 2 555 299 A1**

## REFERENCES CITED IN THE DESCRIPTION

**Patent documents cited in the description**

- JP 2006140087 A